## Europäisches Patentamt
## European Patent Office
## Office européen des brevets

(19)

(11) Numéro de publication : **0 142 421**
**B1**

(12)

# FASCICULE DE BREVET EUROPÉEN

(45) Date de publication du fascicule du brevet :
23.12.87

(51) Int. Cl.⁴ : **F 16 D 51/20**

(21) Numéro de dépôt : 84402140.2

(22) Date de dépôt : 24.10.84

(54) **Levier pour un dispositif de commande mécanique d'un frein à tambour et frein à tambour comportant un tel levier.**

(30) Priorité : 26.10.83 FR 8317097

(43) Date de publication de la demande :
22.05.85 Bulletin 85/21

(45) Mention de la délivrance du brevet :
23.12.87 Bulletin 87/52

(84) Etats contractants désignés :
**DE GB IT NL SE**

(56) Documents cités :
**FR-A- 1 273 303**
**FR-A- 2 020 708**
**FR-A- 2 033 148**
**FR-A- 2 404 766**

(73) Titulaire : **BENDIX France**
**126, rue de Stalingrad**
**F-93700 Drancy (FR)**

(72) Inventeur : **Le Deit, Gérard**
**38, rue Aimé Fluttaz**
**F-77181 Courtry (FR)**

(74) Mandataire : **Poidatz, Emmanuel et al**
**Service Brevets Bendix 44 rue François 1er**
**F-75008 Paris (FR)**

## Description

L'invention concerne des freins à tambours du type dans lesquels un support fixe reçoit en coulissement deux segments de frein portant des garnitures de friction destinées à coopérer avec un tambour tournant, deux extrémités adjacentes de ces segments étant séparées lors du serrage de frein par un dispositif de commande mécanique comportant un levier articulé par une de ses extrémités sur l'un des segments et coopérant par son autre extrémité avec un câble de manœuvre du levier, une entretoise étant placée entre ce levier et l'autre segment. L'invention vise plus particulièrement à fournir un levier utilisé dans un dispositif de commande mécanique d'actionnement d'un frein à tambour du type défini ci-dessus, le levier étant formé à partir d'un flan simple.

Le brevet français publié sous le n° 2 033 148 propose un flan pour la réalisation d'un levier de commande mécanique fabriqué à partir d'une plaque métallique par une seule opération de découpage. La solution dévoilée présente néanmoins plusieurs inconvénients. Nous citerons l'encombrement axial du levier ; en effet l'oreille repliée à 90° occupe une place non négligeable entre le segment et la plaque support ; d'autre part, pour résister à la traction du câble l'oreille doit avoir un encombrement longitudinal important afin de fournir une résistance suffisante et ne pas être dépliée lors de la traction sur le câble ; enfin la forme de l'oreille qui dépasse d'un bord du corps du flan ne permet pas une découpe économique dans une bande métallique car les chutes entre les différents flans seraient relativement importantes.

La présente invention se propose de fournir un levier formé à partir d'un flan de conception plus robuste ne comportant pas les inconvénients énumérés ci-dessus.

Pour ce but, l'invention propose un levier pour un dispositif de commande mécanique de frein à tambour à segments, formé à partir d'un flan comportant un corps allongé percé d'une ouverture à une de ses extrémités pour recevoir une liaison articulée avec une âme d'un segment de frein, caractérisé en ce qu'il présente à l'autre extrémité du corps une échancrure allongée présentant deux côtés parallèles entre eux et sensiblement parallèles à l'axe longitudinal du corps, la distance (e) entre lesdits côtés de l'échancrure étant légèrement supérieure au diamètre (d) d'un câble de manœuvre du levier, cette échancrure réparant des première et deuxième languettes respectivement, la première languette étant pliée en gouttière suivant un axe de pliage sensiblement normal à l'axe longitudinal du corps de manière que la distance (f) repérant les deux côtés de la gouttière soit légèrement supérieure au diamètre (d) du câble, la deuxième languette étant susceptible de coopérer avec une tête d'extrémité du câble pour empêcher celui-ci de sortir de la gouttière dans une direction perpendiculaire au fond de la gouttière.

L'échancrure entre les deux languettes étant légèrement supérieure au diamètre du câble, celui-ci est présenté dans cette échancrure puis par basculement est introduit dans la gouttière dans laquelle le câble est maintenu au moyen de la deuxième languette qui coopère avec la tête d'extrémité du câble empêchant celui-ci d'échapper par translation de la gouttière.

Un levier ainsi réalisé a un encombrement faible en épaisseur, la sécurité et la tenue de l'accrochage étant assurées.

D'autres caractéristiques de la présente invention ressortiront de la description suivante de deux modes de réalisation donnés à titre illustratif mais nullement limitatif, faite en relation avec les dessins annexés sur lesquels :

— la figure 1 est une vue en face d'un frein à tambour réalisé conformément à l'invention ;

— la figure 2 est une vue en coupe suivant la ligne 2-2 de la figure 1 ;

— la figure 3 est une vue de face d'un flan destiné à la construction du levier pour un dispositif de commande mécanique du frein des figures 1 et 2 ;

— la figure 4 est une vue de face d'un levier construit à partir du flan de la figure 3 sur lequel on a représenté un câble et son extrémité ;

— la figure 5 est une vue partielle selon la flèche A de la figure 4 ;

— la figure 6 est une coupe partielle selon la ligne 6-6 de la figure 4 ;

— la figure 7 est une vue de face similaire à la figure 3 montrant une variante de l'invention ;

— la figure 8 est une vue de face d'un levier construit à partir du flan de la figure 7 ;

— la figure 9 est une vue partielle selon la flèche B de la figure 8 ;

— la figure 10 est une coupe partielle selon la ligne 10-10 de la figure 8.

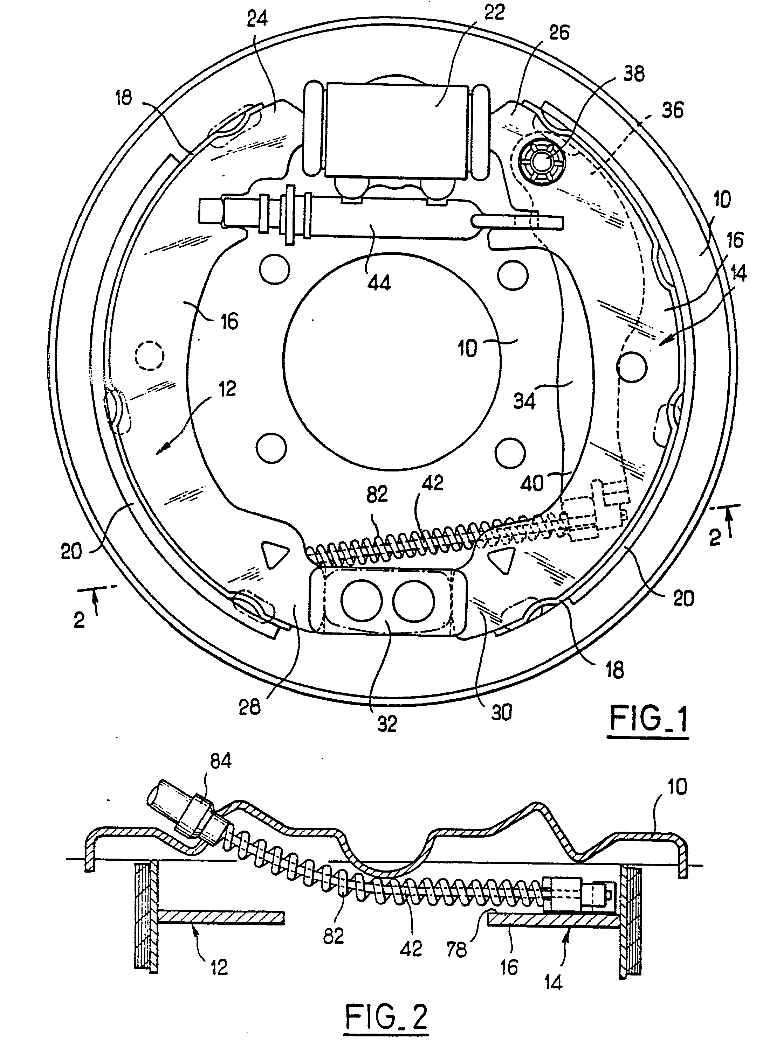

Le frein à tambour représenté sur les figures 1 et 2 comporte une plaque support 10 qui reçoit en coulissement deux segments 12 et 14 comportant chacun une âme 18 et une jante 18, cette dernière recevant des garnitures de friction 20. Ces garnitures de friction 20 sont susceptibles d'entrer en engagement de friction avec un tambour tournant (non représenté) au travers d'un moteur de frein 22 placé entre deux extrémités adjacentes 24 et 26 des segments 12 et 14 respectivement. Les deux autres extrémités 28 et 30 des segments prennent appui sur une pièce d'ancrage 32 au moyen d'un ressort (non représenté), la pièce d'ancrage 32 étant solidaire de la plaque support 10. De même un ressort (non représenté) maintient des extrémités 24 et 26 des segments en appui sur le moteur de frein 22.

D'une façon conventionnelle en freinage manuel, l'actionnement du frein est réalisé au travers d'un dispositif de commande mécanique comprenant un levier 34 articulé par une de ses extrémités 36 sur le segment 14 et plus précisément à proximité de l'extrémité 26 de celui-ci au moyen d'un axe formant pivot 38. L'autre extrémité libre 40 du levier 34 coopère avec un câble de manœuvre 42 relié à un levier situé dans l'habitacle (non représenté). D'une façon conventionnelle le levier 34 coopère avec une entretoise 44 pour solliciter en écartement les extrémités 24 et 26 des segments. L'entretoise 44 est susceptible de comporter un dispositif de réglage automatique pour compenser l'usure des éléments de friction 20.

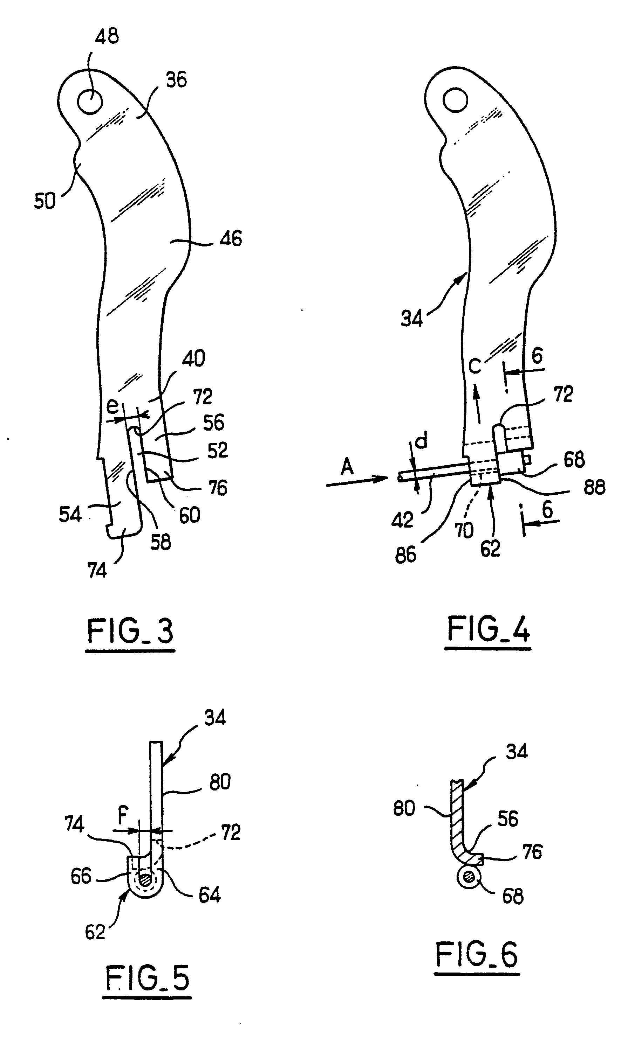

Les figures 4, 5 et 6 montrent le levier 34 réalisé conformément à l'invention à partir du flan représenté sur la figure 3. Le flan représenté sur la figure 3 comprend un corps 46 de longueur notable présentant à une de ses extrémités 36 une ouverture 48 conçue pour former une liaison articulée au moyen du pivot 38. Une saillie 50 proche de l'extrémité 36 est prévue sur le flan pour coopérer avec l'entretoise 44, cette saillie 50 formant un point intermédiaire de la longueur du corps 46 du levier 34. L'autre extrémité 40 du corps 46 comporte une échancrure allongée sensiblement parallèle à l'axe longitudinal du corps 46 et formant une première et une deuxième languette 54 et 56 respectivement. Ces deux languettes 54 et 56 sont séparées par les premier et deuxième côtés 58 et 60 respectivement de l'échancrure 52. Ces deux côtés de l'échancrure 52 sont sensiblement parallèles entre eux et sensiblement parallèles à l'axe principal du corps 46. La distance e séparant les côtés 58 et 60 de l'échancrure 52 est légèrement supérieure au diamètre d du câble 42. Comme on le voit sur la figure 3, les deux languettes 54 et 56 sont d'inégales longueurs.

En se reportant aux figures 4 à 6, on voit que pour former le levier 34 à partir du flan représenté sur la figure 3, on replie d'une part la languette 54 de manière à former une gouttière 62 dont l'axe de pliage est sensiblement normal à l'axe longitudinal de la languette 54. La gouttière 62 ainsi formée comporte un premier côté 64 situé dans le prolongement du corps du flan, l'autre côté 66 de la gouttière 62 étant replié de manière à être sensiblement parallèle au plan du flan 46 et à une distance f du premier côté 64 et du flan 34, la distance f étant légèrement supérieure au diamètre d du câble 42. La deuxième languette 56 est pliée perpendiculairement au corps du flan 46, l'axe de pliage de la languette 56 étant sensiblement normal à l'axe principal de cette languette 56. Comme on le voit sur les figures 4 à 6, le câble 42 présente à son extrémité une tête d'extrémité 68 d'un diamètre supérieur au diamètre du câble 42 et d'une longueur supérieure à la largeur e de l'échancrure 52 ; ainsi, la languette repliée 56 est susceptible de coopérer avec cette tête d'extrémité 68 pour éviter une translation du câble 42 vers le haut en se référant à la figure 4, c'est-à-dire parallèlement au fond 70 de la gouttière 62, selon la direction de la flèche C de la figure 4, la raideur du câble interdisant le dégagement de la tête d'extrémité 68 par rapport à la languette repliée 56. En désignant par 72 le fond de l'échancrure 52 on voit que ce fond est plus proche de l'ouverture 48 que l'extrémité libre 74 de la première languette repliée 54. De même on voit que le fond 72 est plus proche de l'ouverture 48 que l'extrémité libre 76 de la deuxième languette 56.

Lorsque le levier 34 des figures 4, 5 et 6 est monté dans le frein représenté sur les figures 1 et 2, on place la face 80 du levier 34 sur la face 78 de l'âme 16. La liaison articulée est alors mise en place au moyen du pivot 38 immobilisé d'une façon conventionnelle. Dans cette position on constate que les deux languettes 54 et 56, repliées, se situent en éloignement de la face 78 de l'âme et ne risquent pas d'interférer avec celle-ci. D'une façon conventionnelle, le câble 42 est muni d'un ressort de compression 82 permettant un meilleur coulissement du câble par rapport au support fixe 10 d'une part et d'autre part le ressort 82 maintient la partie du câble contenue dans le frein tendue en prenant appui à une extrémité sur une butée de gaine 84 et à l'autre extrémité sur la tête d'extrémité du câble au travers du levier de frein.

Pour monter le câble sur le levier de frein à main, on procède de la façon suivante : le levier 34 est dégagé par rotation dans le sens des aiguilles d'une montre du segment 14, ce qui fait apparaître l'extrémité 40 de celui-ci. Après avoir comprimé le ressort 82, on introduit le câble 40 dans la fente 52 en veillant à ce que la tête d'extrémité 68 se trouve entre le levier et la plaque support fixe 10. Lorsque le câble est amené en appui sur le fond 72 de l'échancrure 52 le câble est pivoté de façon à ce que la partie de diamètre d pénètre dans la gouttière 62 tandis que la tête d'extrémité 68 se place grâce à l'arrondi du pliage de la languette 56 en face de l'extrémité 76 de la languette 56. En relâchant le ressort 82, celui-ci vient en appui sur l'extrémité 86 de la gouttière 62 tandis que la tête d'extrémité 68 vient en appui sur la deuxième extrémité 88 de la gouttière 62. Comme on le voit sur les figures 4 et 5, la tête d'extrémité 68 vient en appui sur la tranche de la gouttière 62 et par conséquent ne risque pas sous l'effort de traction du câble de déformer cette portion d'appui.

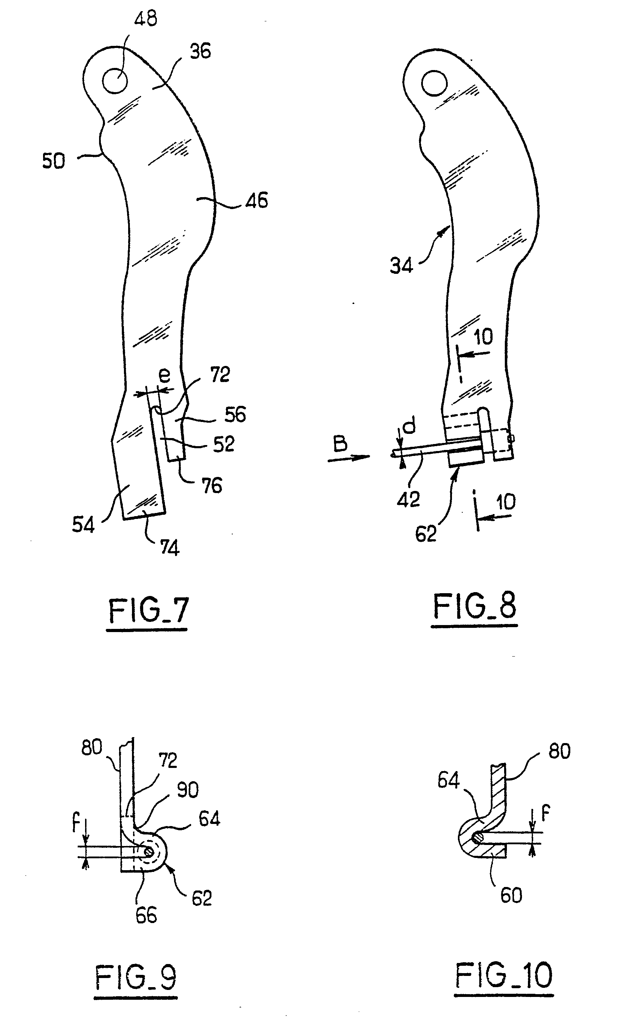

Sur les figures 8, 9 et 10 on a représenté une variante du levier représenté sur les figures 4 à 6 obtenue à partir du flan représenté sur la figure 7. On a utilisé les mêmes chiffres de référence pour les éléments remplissant les mêmes fonctions. Dans ce mode de réalisation, la première languette 54 forme également une gouttière 62 pour recevoir le câble 42 mais cette gouttière est formée par un double pliage de la languette 54 de manière à ce que celle-ci s'ouvre perpendiculairement au plan du corps 46 du levier 34, c'est-à-dire que les deux côtés 64 et 66 de la gouttière 62 sont sensiblement perpendiculaires au plan principal du corps du flan. Le premier pliage 90 de la languette 54 représenté sur la figure 9 est situé plus loin de l'ouverture 48 que le fond 72 de l'échancrure 52. Dans ce mode de réalisation, la languette 56 est plane et est située dans le prolongement du corps 46 du flan.

Le montage du câble 42 s'effectue de la même façon que pour le mode de réalisation précédent avec néanmoins le fait que le câble 42 pénètre naturellement dans la gouttière 62 lorsqu'après avoir présenté le câble perpendiculairement au levier on bascule celui-ci de manière qu'il se trouve sensiblement dans le plan du levier 34. On voit également que la deuxième languette 56 s'oppose à la sortie du câble 42 de la gouttière 62 sur laquelle il prend appui au travers de la tête d'extrémité 68.

**Revendications**

1. Levier pour un dispositif de commande mécanique de frein à tambour à segments, formé à partir d'un flan comportant un corps (46) allongé percé d'une ouverture (48) à une (36) de ses extrémités pour recevoir une liaison articulée avec une âme (16) d'un segment (14) du frein, caractérisé en ce qu'il présente à l'autre extrémité (40) du corps (46) une échancrure allongée (52) présentant deux côtés (58, 60) parallèles entre eux et sensiblement parallèles à l'axe longitudinal du corps (46), la distance (e) entre lesdits côtés (58, 60) de l'échancrure étant légèrement supérieure au diamètre (d) d'un câble de manœuvre (42) du levier, cette échancrure séparant des première et deuxième languettes 54, 56 respectivement, la première languette (54) étant pliée en gouttière (62) suivant un axe de pliage sensiblement normal à l'axe longitudinal du corps (46) de manière que la distance (f) repérant les deux côtés (64, 66) de la gouttière soit légèrement supérieure au diamètre (d) du câble (42), la deuxième languette (56) étant susceptible de coopérer avec une tête d'extrémité (68) du câble (42) pour empêcher celui-ci de sortir de la gouttière dans une direction perpendiculaire au fond (70) de la gouttière (62).

2. Levier selon la revendication 1, caractérisé en ce que la gouttière (62) formée par la première languette (54) comporte un côté (64) situé dans le prolongement du corps (46) du flan, l'autre côté (66) de la gouttière (62) étant parallèle au corps (46) du flan et décalé de celui-ci, en ce que la deuxième languette (56) est pliée perpendiculairement par rapport au corps (46) du flan du même côté du flan que ladite gouttière (62) et en ce que la gouttière (62) et la deuxième languette (56) sont toujours séparées par ladite échancrure (52) dont le fond (72) est situé plus près de ladite ouverture (48) que les extrémités libres (74, 76) des deux dites languettes (54, 56).

3. Levier selon la revendication 1, caractérisé en ce que les deux côtés (64, 66) de la gouttière (62) formée par la première languette (54) sont perpendiculaires au plan principal du corps (46) du flan, en ce que la deuxième languette (56) est située dans le prolongement du corps (46) du flan et en ce que le fond (72) de ladite échancrure (52) est situé plus près de ladite ouverture (48) qu'un premier pliage (90) de la première languette (54).

4. Frein à tambour à segments intérieurs du type dans lequel les segments (12, 14) portant les garnitures de friction (20) destinées à coopérer avec un tambour tournant sont montés sur un support fixe (10), les extrémités adjacentes (24, 26) des segments (12, 14) sont séparées lors du serrage du frein par un dispositif de commande mécanique comprenant un levier (34) mobile articulé par une extrémité (36) à l'un des segments (14) et accouplé par l'autre extrémité (40) à un câble (42) et une entretoise (44) agissant entre le levier (34) en un point (50) intermédiaire de sa longueur et l'autre segment (12), le frein étant caractérisé en ce que le levier mobile articulé (34) est du type selon l'une des revendications 2 ou 3, le corps (46) étant adjacent à une face (78) d'une âme (16) d'un (14) des deux segments (12, 14), la gouttière (62) et la deuxième languette (56) étant entièrement situées d'un même côté de ladite face (78) pour ne pas interférer avec l'âme (16) du segment (14), la tête d'extrémité (68) du câble (42) coopérant axialement avec une extrémité (88) de la gouttière (62) située du côté de ladite échancrure (52).

**Claims**

1. Lever for a mechanical control device for a drum brake of the type having brake pads, made from a sheet member comprising an elongated body (46) provided with an opening (48) at one (36) of its ends for receiving an articulated connection with a web (16) of a brake pad (14), characterized in that it presents at the other end (40) of the body (46) an elongated recess (52) having two sides (58, 60) parallel to each other and substantially parallel to the longitudinal axis of the body (46), the distance (e) between said sides (58, 60) of the recess being slightly larger than the diameter (d) of an actuating cable (42) of the lever, said recess separating first and second flaps (54, 56), respectively, the first flap (54) being bent into the shape of a channel (62) about a bending axis substantially normal to the longitudinal axis of the body (46) such that the distance (f) between the two sides (64, 66) of the channel slightly exceeds the diameter (d) of the cable (42), the second flap (56) being adapted to cooperate with an end piece (68) of the cable (42) in order to prevent the latter from leaving the channel in a direction perpendicular to the bottom (70) of the channel (62).

2. Lever according to claim 1, characterized in that the channel (62) formed by the first flap (54) has a side (64) situated in an extension of the body (46) of the sheet, the other side (66) of the channel (62) being parallel to the body (46) of the sheet member and displaced with respect thereto, in that the second flap (56) is bent perpendicularly with respect to the body (46) of the sheet member on the same side of the sheet member as said channel (62), and in that the channel (62) and the second flap (56) are always separated by said recess (52) having its bottom (72) situated closer to said opening (48) than the free ends (74, 76) of the two flaps (54, 56).

3. Lever according to claim 1, characterized in that the two sides (64, 66) of the channel (62) formed by the first flap (54) are perpendicular to the principal plane of the body (46) of the sheet member, in that the second flap (56) forms an extension of the body (46) of the sheet member, and in that the bottom (72) of said recess (52) is situated closer to said opening (48) than a first bend (90) of the first flap (54).

4. Internal brake pad drum brake of the type wherein the brake pads (12, 14) support friction linings (20) adapted to cooperate with a rotating drum, are mounted on a fixed support (10), the adjacent ends (24, 26) of the brake pads (12, 14) are separated during brake application by a mechanical control device comprising a movable lever (34) articulated by one end (36) to one of the brake pads (14) and coupled by the other end (40) to a cable (42) and a strut (44) acting between the lever (34) at a point (50) intermediate its length and the other brake pad (12), the brake being characterized in that the articulated movable lever (34) is of the type according to any of claims 2 or 3, the body (46) being adjacent to one face (78) of a web (16) of one (14) of the two brake pads (12, 14), the channel (62) and the second flap (56) being entirely situated on one side of said face (78) in order not to interfere with the web (16) of the brake pad (14), the end piece (68) of the cable (42) cooperating axially with one end (88) of the channel (62) situated on the side of said recess (52).

**Patentansprüche**

1. Hebel für eine mechanische Betätigungsvorrichtung einer Backen-Trommelbremse, hergestellt aus einem Blechteil in Form eines länglichen Körpers (46), der an einem (36) seiner Enden von einer Öffnung (48) durchbohrt ist, um eine Gelenkverbindung mit einem Steg (16) eines Bremsbackens (14) aufzunehmen, dadurch gekennzeichnet, daß er am anderen Ende (40) des Körpers (46) eine längliche Ausnehmung (52) mit zwei Seiten (58, 60) aufweist, die parallel zueinander und im wesentlichen parallel zur Längsachse des Körpers (46) verlaufen, wobei der Abstand (e) zwischen diesen Seiten (58, 60) der Ausnehmung geringfügig größer als der Durchmesser (d) eines Betätigungsseiles (42) des Hebels ist, wobei diese Ausnehmung eine erste und eine zweite Zunge (54, 56) voneinander trennt, wobei die erste Zunge (54) in Form einer Rinne (62) um eine zur Längsachse des Körpers (46) im wesentlichen senkrechte Biegeachse umgebogen ist, derart, daß der Abstand (f) zwischen den beiden Seiten (64, 66) der Rinne geringfügig größer als der Durchmesser (d) des Seils (42) ist, wobei die zweite Zunge (56) mit einem Endstück (68) des Seils (42) zusammenwirkt, um ein Entweichen des Seils aus der Rinne in einer Richtung senkrecht zum Boden (70) der Rinne (62) zu verhindern.

2. Hebel nach Anspruch 1, dadurch gekennzeichnet, daß die von der ersten Zunge (54) gebildete Rinne (62) eine in der Verlängerung des Körpers (46) des Blechteiles liegende Seite (64) aufweist, während die andere Seite (66) der Rinne (62) parallel zum Körper (46) des Blechteils verläuft und bezüglich desselben versetzt ist, daß die zweite Zunge (56) senkrecht bezüglich des Körpers (46) des Blechteils auf der gleichen Seite des Blechteils wie die Rinne (62) umgebogen ist, und daß die Rinne (62) und die zweite Zunge (56) immer durch die Ausnehmung (52) getrennt sind, deren Boden (72) näher an der Öffnung (48) als die freien Enden (74, 76) der beiden Zungen (54, 56) angeordnet ist.

3. Hebel nach Anspruch 1, dadurch gekennzeichnet, daß die beiden Seiten (64, 66) der Rinne (62), die von der ersten Zunge (54) gebildet wird, senkrecht zur Hauptebene des Körpers (46) des Blechteils verlaufen, daß die zweite Zunge (56) in der Verlängerung des Körpers (56) des Blechteils liegt und daß der Boden (72) der Ausnehmung (52) näher an der Öffnung (48) als eine erste Krümmung (90) der ersten Zunge (54) angeordnet ist.

4. Innenbacken-Trommelbremse, bei der die Bremsbacken (12, 14), welche mit einer umlaufenden Trommel zusammenwirkende Bremsbeläge (20) tragen, an einem Bremsträger (10) angebracht sind, wobei die angrenzenden Enden (24, 26) der Bremsbacken (12, 14) während des Bremsvorganges durch eine mechanische Steuervorrichtung mit einem Hebel (34) getrennt sind, welcher mit einem Ende (36) an einem der Bremsbacken angelenkt und mit dem anderen Ende (40) an einem Seil (42) angebracht ist, und eine Druckstrebe (44) zwischen dem Hebel (34) an einem Punkt (50) zwischen seiner Länge und dem anderen Bremsbacken (12) wirkt, wobei die Bremse dadurch gekennzeichnet ist, daß der angelenkte bewegliche Hebel (34) nach einem der Ansprüche 2 oder 3 ausgebildet ist, wobei der Körper (46) angrenzend an einer Stirnseite (78) eines Steges (16) eines (14) der Bremsbacken (12, 14) angeordnet ist, wobei die Rinne (62) und die zweite Zunge (56) vollständig auf der gleichen Seite dieser Stirnseite (78) angeordnet sind, um nicht in den Bereich des Steges (16) des Bremsbackens (14) zu gelangen, wobei das Endstück (68) des Seils (42) axial mit einem auf der Seite dieser Ausnehmung (52) angeordneten Ende (88) der Rinne (62) zusammenwirkt.

_FIG_1_

_FIG_2_

FIG_3

FIG_4

FIG_5

FIG_6

2

**FIG_7**

**FIG_8**

**FIG_9**

**FIG_10**